# EUROPÄISCHE PATENTSCHRIFT

(11) **EP 0 452 670 B1**
(45) Veröffentlichungstag und Bekanntmachung des Hinweises auf die Patenterteilung: **27.07.1994**
(21) Anmeldenummer: 91103697.8
(22) Anmeldetag: 11.03.1991
(51) Int. Cl.: F16L 37/28

(54) **Schnellverschlusskupplung**
Quick acting coupling
Raccord rapide

(30) Priorität: 16.03.1990 DE 4008420
(43) Veröffentlichungstag der Anmeldung: 23.10.1991
(73) Patentinhaber: Asea Brown Boveri Aktiengesellschaft, 68309 Mannheim (DE)
(72) Erfinder: Krämer, Wilhelm, W-6902 Sandhausen (DE)
(74) Vertreter: Rupprecht, Klaus, Dipl.-Ing.

(56) Entgegenhaltungen:
- FR-A- 2 330 247
- US-A- 2 330 413
- US-A- 3 500 859
- US-A- 3 570 543

## Beschreibung

Die Erfindung bezieht sich auf eine Schnellverschlußkupplung gemäß dem Oberbegriff des Anspruchs 1 und kann insbesondere zur Ein/Auskupplung von flüssigkeitsgekühlten (ölgekühlten) Stromrichtermodulen an geeigneten Ölführungsprofilen in Stromrichterschränken von Lokomotiven eingesetzt werden.

Eine solche Schnellverschlußkupplung ist aus der FR-A-2 330 247 bekannt. Dort wird ein geschlossener Kühlkreislauf zur Flüssigkeitskühlung elektronischer Geräte beschrieben, wobei eine Schnellverschlußkupplung eingesetzt ist. Bei geschlossener Kupplung drücken zwei Dichtungsmanschetten gegeneinander und gegen einen äußeren hohlzylinderförmigen Mantel. Gleichzeitig dichten diese Dichtungsmanschetten auch Ventilgehäuse ab, die zur Führung von Ventilstößeln dienen, welche bei geschlossener Kupplung gegeneinander drücken, so daß ein Kühlflüssigkeitskanal freigegeben wird.

Aus der US-A-2 330 413 ist im Zusammenhang mit einem Hyraulik-Bremssystem eine Schnellverschlußkupplung bekannt, bei der im geschlossenen Zustand zwei Dichtungsmanschetten gegeneinander drücken, welche zur FÜhrung von Ventilstößeln dienende Ventilgehäuse abdichten. Die Ventilstößel drücken gegeneinander, so daß ein Kühlflüssigkeitskanal freigegeben wird.

Bei beiden bekannten Schnellverschlußkupplungen weist der Kühlflüssigkeitskanal einen relativ engen Querschnitt auf, der zudem noch durch die Ventilstößel zusätzlich reduziert wird. Ferner ist die Dichtredundanz bei geöffneter Kupplung nicht groß, da lediglich eine Dichtung (Dichtungsmanschette) im Eingriff ist. Das Totvolumen beim Kuppeln/Entkuppeln ist relativ groß, so daß ein beträchtlicher Kühlflüssigkeitsverlust beim Entkuppeln entsteht und beim Kuppeln Luftblasen in die Kühlflüssigkeit eingebracht werden.

Eine weitere Schnellverschlußkupplung ist aus dem Katalog 1.89 "Hansen Rohr- und Schlauch-Schnellkupplungen", Baureihe 1 bis 20 HK bekannt und besonders geeignet für Problemmedien, welche umweltverschmutzend oder -gefährdend sind (z.B. Öl). Bei Leitungstrennung werden beide Leitungsenden durch federbelastete und somit selbsttätig schließende Absperrventile mit Ventilkegeln zuverlässig geschlossen. Die Dichtfunktion gegenüber der Umwelt übernimmt ein O-Ring. Erst nachdem dieser dichtend in Funktion ist, können sich die Ventile ohne Ausfluß des Mediums öffnen. Beim Einkuppeln werden erst die Ventile geschlossen, bevor der O-Ring seine Dichtfunktionen beendet. Ein Ausfließen des Mediums während der Kupplungsvorgänge (Kuppeln/Entkuppeln) ist unmöglich.

Diese bekannte Schnellverschlußkupplung ist relativ starr und gestattet nur einen sehr geringen Toleranzausgleich in axialer und radialer Richtung, was insbesondere beim Ein/Auskuppeln von auf Schienen geführten Stromrichtermodulen an Ölführungskanälen von Nachteil ist. Im ein- und ausgekuppelten Zustand ist jeweils nur eine Dichtfläche vorhanden, d.h. es mangelt an Dichtredundanz im Kuppelbereich. Zum Teil ergeben sich relativ große Totvolumen beim Kuppeln bzw. Entkuppeln, d.h. beim Kuppeln werden Luftblasen in das Medium eingebracht und beim Entkuppeln geht Medium verloren (z.B. Ölverlust). Desweiteren werden im eingekuppelten Zustand zu kleine, einengende Durchflußquerschnitte gebildet, was zu einem Druckabfall im Mediumsystem (z.B. Kühlsystem) bzw. zu einer Verringerung der Medium-Durchflußgeschwindigkeit bzw. zu einer unzulässig hohen Pumpenleistung führt (Nachteil für Hilfsantrieb bei Einsatz auf Lokomotiven).

Der Erfindung liegt die Aufgabe zugrunde, eine Schnellverschlußkupplung der eingangs genannten Art anzugeben, deren Totvolumen beim Kuppeln bzw. Entkuppeln sehr klein, d.h. fas Null ist.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, daß die vorgeschlagene Schnellverschlußkupplung aufgrund der eingesetzten Dichtungsmanschetten einen relativ großen axialen und radialen Toleranzausgleich ermöglicht. Es bereitet keine Probleme, wenn beide Schnellverschlußkupplungsteile beim Einkuppeln schief zueinander stehen oder Achsversatz haben. Gleichzeitig wird durch die radial und axial verformbaren Dichtungsmanschetten das Totvolumen beim Kuppeln bzw. Entkuppeln sehr klein, d.h. fast null. Sowohl im eingekuppelten als auch im ausgekuppelten Zustand ist Dichtredundanz gegeben, und zwar im eingekuppelten Zustand durch die gegeneinander pressenden Stirnflächen und durch die gegen den Mantel pressenden Flächen der Dichtungsmanschetten, sowie im ausgekuppelten Zustand durch die Ventilkegeldichtung und die gegen den Ventilkegel pressenden Dichtungsmanschetten. Da die beiden Schnellverschlußkupplungsteile bis auf den Mantel symmetrisch aufgebaut sind, ergeben sich Vorteile bei der Herstellung, Montage und Lager/Reservehaltung. Die Schnellverschlußkupplung kann universell sowohl für Flüssigkeiten, z.B. Öl, als auch für Gase, z.B. Kühlgase von Stromrichtern, verwendet werden.

Die Erfindung wird nachstehend anhand der in der Zeichnung dargestellten Ausführungsformen erläutert. Es zeigen:
- Fig. 1, 2: den prinzipiellen Aufbau der beiden, eine Schnellverschlußkupplung bildenden Schnellverschlußkupplungsteile,
- Fig. 3, 4, 5: die beiden Schnellverschlußkupplungsteile im aus- und eingekuppelten Zustand,
- Fig. 6, 7: Details der Dichtungsmanschette und der Mantel-Verbindung.

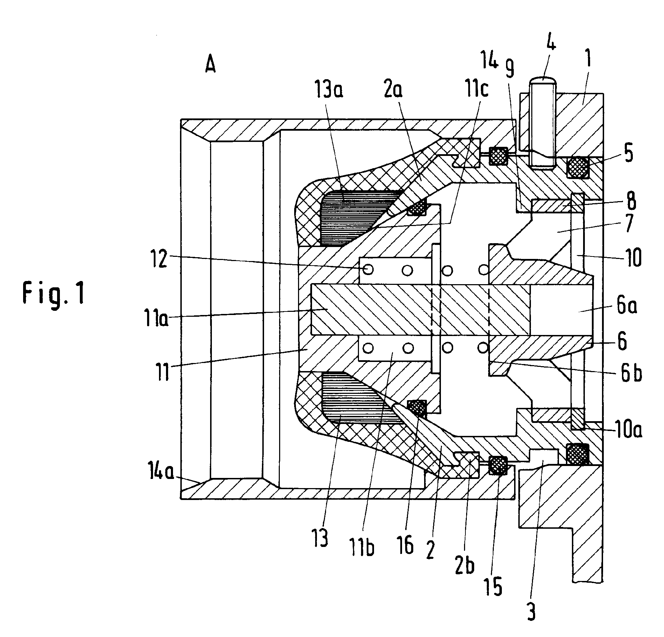

In Fig. 1 ist der prinzipielle Aufbau eines Schnellverschlußkupplungsteiles dargestellt, und zwar am Beispiel eines mit einem flüssigkeitsgekühlten Stromrichtermodul zu verbindenden Schnellverschlußkupplungsteiles A. Das Schnellverschlußkupplungsteil A besitzt ein ringförmiges Ventilgehäuse 2 mit abgewinkelter Stirnfläche 2a. Zur Befestigung des Schnellverschlußkupplungsteiles A an einem Flansch 1 eines Stromrichtermoduls weist das Ventilgehäuse 2 eine Ringnut 3 auf. Das mit der Ringnut 3 versehene Endstück des Ventilgehäuses 2 wird in die kreisförmige Öffnung des Flansches 1 eingeführt, worauf eine sich in einer Gewindebohrung des Flansches 1 abstützende Schraube zur Ringnut 3 hin eingeschraubt werden kann. Das in die Ringnut 3 eingreifende Endstück der Schraube 4 fixiert das Ventilgehäuse 2 im Flansch 1. Auf diese Weise wird ein steckbarer Flanschanschluß mit Nuthalterung gebildet. Zur Abdichtung der Flansch 1/Ventilgehäuse 2-Verbindung ist eine Gehäusedichtung 5 vorgesehen, die in eine Ringnut im Ventilgehäuse 2 eingelegt ist und sich gegen die Innenwandung des Flansches 1 abstützt.

Am Ventilgehäuse 2 ist eine im Innenraum des Ventilgehäuses 2 befindliche Kegelführung 6 befestigt. Die Kegelführung 6 ist über zwei oder mehr Tragarme 7 mit einem Ring 8 verbunden. Dieser Ring 8 stützt sich gegen die Innenwandung des Ventilgehäuses 2 ab und wird einerseits mit Hilfe einer vorstehenden Ringnase 9 des Ventilgehäuses 2 und andererseits mit Hilfe eines Sicherungsringes 10 fixiert. Der Sicherungsring 10 greift hierzu in eine Ringnut 10a im Ventilgehäuse 2 ein.

In den zylinderförmigen Hohlraum 6a der Kegelführung 6 greift ein zylindrischer Führungszapfen 11a eines Ventilkegels 11 ein. Ein Ringspalt 11b zwischen Führungszapfen 11a und Innenwandung des Ventilkegels 11 dient zur Aufnahme einer Spiralfeder 12. Die Spiralfeder 12 drückt andererseits gegen die Stirnfläche 6b der Kegelführung 6, wodurch die Kegelfläche 11c des Ventilkegels 11 zumindest teilweise gegen die Innenwandung der abgewinkelten Stirnfläche 2a des Ventilgehäuses 2 gepreßt wird. Eine in einer Nut des Ventilkegels 11 eingelegte Ventilkegeldichtung 16 dichtet die Berührungsfläche des Ventilkegels 6 am Ventilgehäuse 2 im ausgekuppelten Zustand ab.

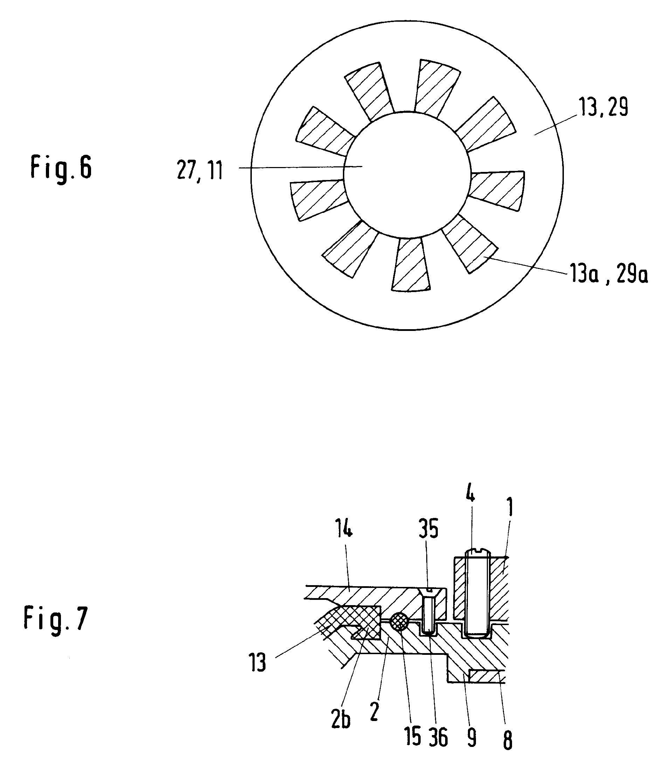

Eine ringförmige Dichtungsmanschette 13 aus einem weichen, elastischen Gummimaterial (Shorehärte vorzugsweise 35 bis 45) greift an ihrer einen Stirnseite in eine nach außen gerichtete Ringnut 2b des Ventilgehäuses 2 und wird hierdurch befestigt. Die Innenmantelfläche sowie die wulstige weitere Stirnseite der Dichtungsmanschette 13 schmiegen sich der abgewinkelten Stirnfläche 2a und teilweise dem Ventilkegel 11 an, wodurch eine zusätzliche Abdichtung zwischen Ventilgehäuse und Ventilkegel 11 erzielt wird. In das weiche Gummimaterial der Dichtungsmanschette 13 ist eine Vielzahl von dreieckigen Segmenten 13a aus Kunststoff oder Metall eingelagert, um die Dichtungsmanschette beim Gegeneinanderdrücken der Ventilkegel radial auseinanderzudrücken, d.h. einen Ringspalt zwischen Ventilkegel und Innendurchmesser der Manschette zu schaffen. Details hierzu sind in Fig. 6 dargestellt.

Ein hohlzylinderförmiger Mantel 14 greift um das Ventilgehäuse 2 und die Dichtungsmanschette 13. Der Mantel 14 ist über eine Manteldichtung 15 mit dem Ventilgehäuse 2 verbunden. Zur Aufnahme der Manteldichtung 15 sind sowohl das Ventilgehäuse 2 als auch der Mantel 14 mit Ringnuten versehen. Weitere Details der Mantel-Verbindung sind in Fig. 7 dargestellt. Um das Zusammenstecken des dargestellten Schnellverschlußkupplungsteiles mit einem weiteren Schnellverschlußkupplungsteil zu erleichtern, besitzt der Mantel 14 eine Schrägfläche 14a an der dem Flansch 1 abgewandten Stirnseite (Kante).

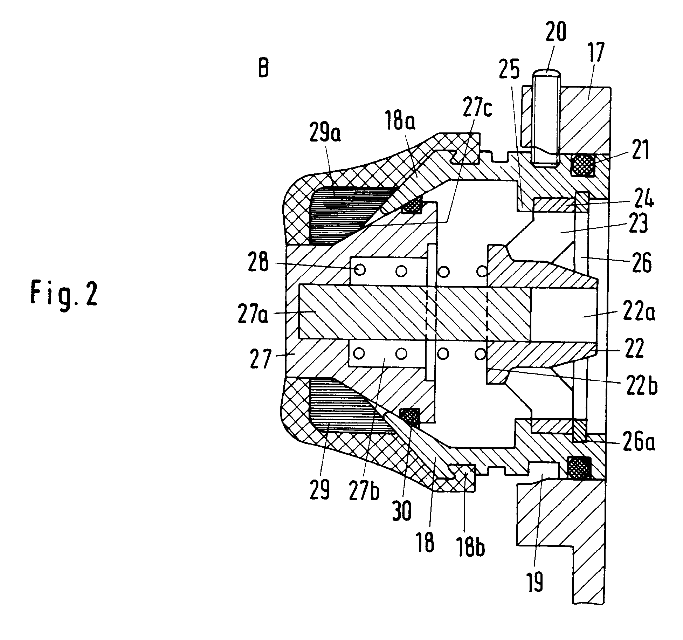

Das in Fig. 1 dargestellte, mit einem Flansch 1 eines Stromrichtermoduls verbundene Schnellverschlußkupplungsteil A ist mit einem weiteren, in Fig. 2 dargestellten, mit einem Flansch 17 eines Ölrahmens eines Stromrichterschrankes verbundenen Schnellverschlußkupplungsteils B zusammenzustecken. Dieses weitere Schnellverschlußkupplungsteil B ist identisch wie das in Fig. 1 beschriebene Teil A aufgebaut, besitzt jedoch keinen Mantel 14 inklusive Manteldichtung 15. Das weitere Schnellverschlußkupplungsteil B weist ein Ventilgehäuse 18 mit abgewinkelter Stirnfläche 18a, Ringnut 18b, Ringnut 19, Ringnase 25 und Ringnut 26a, eine Kegelführung 22 mit zylinderförmigem Hohlraum 22a, Stirnfläche 22b, Tragarm 23 und Ring 24, einen Ventilkegel 27 mit Führungszapfen 27a, Ringspalt 27b und Kegelfläche 27c, eine Spiralfeder 28, eine Dichtungsmanschette 29 inklusive Segmente 29a, einen Sicherungsring 26, eine Gehäusedichtung 21 sowie eine Ventilkegeldichtung 30 auf. Die sich in einer Gewindebohrung des Flansches 17 abstützende und in die Ringnut 19 eingreifende Schraube ist mit 20 bezeichnet.

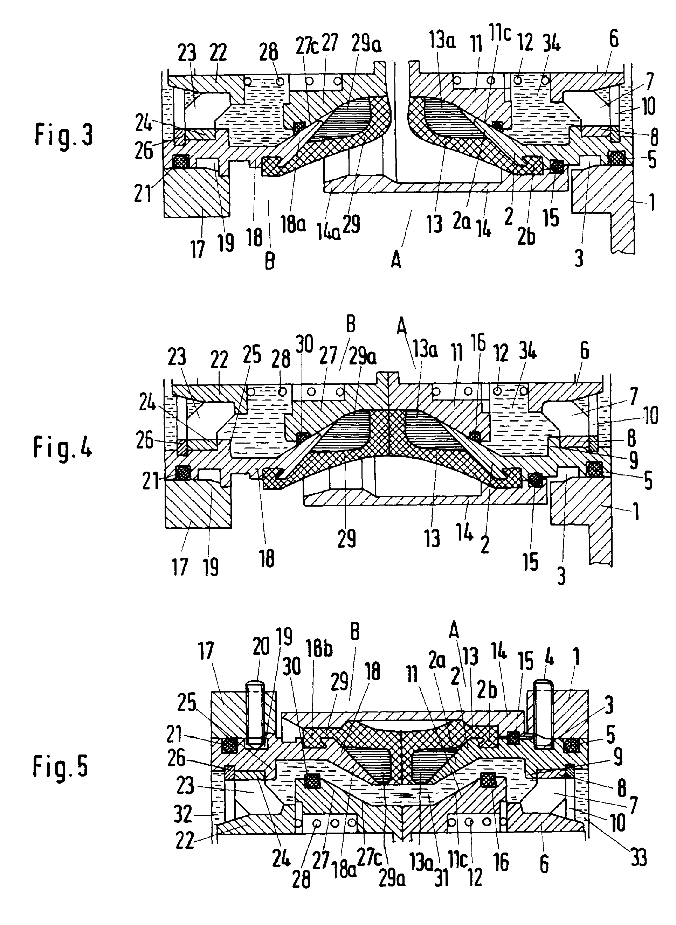

In den Fig. 3, 4 und 5 sind die beiden in Fig. 1 und 2 gezeigten Schnellverschlußkupplungsteile im aus- und eingekuppelten Zustand dargestellt. Fig. 3 zeigt eine komplette Schnellverschlußkupplung im ausgekuppelten Zustand. Es ist zu erkennen, daß der Mantel 14 des mit dem Flansch 1 eines Stromrichtermoduls verbundenen Schnellverschlußkupplungsteiles A bereits über die Dichtungsmanschette 29 des mit dem Flansch 17 eines Ölrahmens verbundenen Schnellverschlußkupplungsteiles B greift, wobei die Schrägfläche 14a ein Aufschieben auf die Dichtungsmanschette erleichtert. Die Ventilkegel 11 und 27 sowie die Dichtungsmanschetten 13 und 29 berühren sich noch nicht. Die Kegelfläche 11c des Ventilkegels wird durch die Federkraft der Spiralfeder 12 fest an die Innenfläche der abgewinkelten Stirnfläche 2a des Ventilgehäuses 2 gedrückt. Gleichzeitig wird die Ventilkegeldichtung 16 fest gegen die Innenfläche der abgewinkelten Stirnfläche 2a gepreßt, wodurch eine Abdichtung des mit Öl 34 gefüllten Innenraumes des Schnellverschlußkupplungsteiles gewährleistet ist. Eine weitere Abdichtung des Innenraumes ergibt sich dadurch, daß sich die in der Ringnut 2b fixierte Dichtungsmanschette 13 einerseits abschnittsweise eng an die Kegelfläche 11c des Ventilkegels 11 anschmiegt und andererseits eng am Außenmantel der abgewinkelten Stirnfläche 2a anliegt.

Auch beim weiteren, mit dem Flansch 17 des Ölrahmens verbundenen Schnellverschlußkupplungsteil ist eine Abdichtung des mit Öl gefüllten Innenraumes über die Ventilkegeldichtung 30 und die Dichtungsmanschette 29 gewährleistet.

Auch die in Fig. 4 dargestellte komplette Schnellverschlußkupplung befindet sich noch im ausgekuppelten Zustand, wobei sich im Unterschied zum in Fig. 3 gezeigten Zustand die Stirnflächen der beiden Ventilkegel 11 und 27 sowie der beiden Dichtungsmanschetten 13 und 29 berühren. Die Innenräume der beiden Schnellverschlußkupplungsteile werden jedoch nach wie vor über die Ventilkegeldichtungen 16 und 30 sowie Dichtungsmanschetten 13 und 29 abgedichtet.

Fig. 5 zeigt eine komplette Schnellverschlußkupplung im eingekuppelten Fall. Es ist zu erkennen, daß sowohl die Ventilkegel 11 und 27 als auch die Dichtungsmanschetten 13 und 29 jeweils fest gegeneinander gepreßt sind, wobei die Pressung bei den Ventilkegeln 11 und 27 mittels der Federn 12 und 28 sowie bei den Dichtungsmanschetten 13, 29 aufgrund deren Elastizität aufrechterhalten wird. Während des Einkuppelns können die Ventilkegel 11 und 27 exzentrisch aufeinander treffen, da die Stirnflächen der Dichtungsmanschetten 13 und 29 ungefähr 0,3 bis 1 mm vor dem Öffnen der Ventilkegeldichtungen 16 und 30 die Dichtheit vorab herstellen. Die Federn 12, 28 befinden sich im komprimierten Zustand. Die einander zugewandten Stirnflächen der Ventilkegel 11 bzw. 27 und Kegelführungen 6 bzw. 22 liegen dicht beieinander. Die Kegelflächen 11c bzw. 27c sind von den abgewinkelten Stirnflächen 2a bzw. 18a entfernt, so daß sich ein Ringkanal 31 ausbildet, begrenzt durch die einander zugewandten Flächen von Ventilgehäuse 2 und Ventilkegel 11, von der aufgedehnten Dichtungsmanschette 13 und Ventilkegel 11, von Dichtungsmanschette 29 und Ventilkegel 27 und von Ventilgehäuse 18 und Ventilkegel 27. Die Ventilkegeldichtungen 16 und 30 liegen frei. Die Abdichtung des Ringkanals 31 nach außen wird von den beiden Dichtungsmanschetten 13 und 29 gewährleistet, die den vom Mantel 14 und den abgewinkelten Stirnflächen 2a und 18a der Ventilgehäuse 2 und 18 gegebildeten Raum ausfüllen und stirnseitig eng aneinanderpressen. Eine zusätzliche Abdichtung ergibt sich im Bereich der Ringnuten 2b und 18b durch die Pressung der Dichtungsmanschette 13 zwischen Ventilgehäuse 2 und Mantel 14 sowie durch die Pressung der Dichtungsmanschette 29 zwischen Ventilgehäuse 18 und Mantel 14.

Der Ringkanal 31 mündet einerseits in eine zwischen Ventilgehäuse 18 und Kegelführung 22 gebildete (auch im ausgekuppelten Zustand vorhandene) ringförmig Eintrittsöffnung 32 und andererseits in eine zwischen Ventilgehäuse 2 und Kegelführung 6 gebildete (auch im ausgekuppelten Zustand vorhandene) ringförmige Austrittsöffnung 33. Die Fließrichtung des Öls innerhalb des Ringkanales 31 ist mit einem Pfeil bezeichnet, wobei die Flußrichtung jedoch auch in umgekehrter Richtung verlaufen kann. Die zur Aneinanderpressung der beiden Schnellverschlußkupplungsteile A, B im eingekuppelten Zustand notwendige Kraft wird durch eine externe, nicht dargestellte Spannvorrichtung aufgebracht, so daß die Schnellverschlußkupplung selbst keine Arretiervorrichtung zur Aufrechterhaltung des eingekuppelten Zustandes benötigt.

In Fig. 6 sind Details der Dichtungsmanschetten 13 bzw. 29 dargestellt. Es ist ein Schnitt durch einen Ventilkegel 11 bzw. 27 mit anliegender Dichtungsmanschette 13 bzw. 29 gezeigt. Es sind neun Segmente 13a bzw. 29a zu erkennen, die in gleichmäßigen Abständen strahlenförmig um den Ventilkegel 11 bzw. 27 angeordnet sind. Die Anzahl der Segmente 13a kann je nach Kupplungsgröße deutlich größer sein (bei kleinen Kupplungen auch kleiner). Die harten dreieckigen Segemente 13a bzw. 29a bewirken insbesondere das Auf- und Abgleiten der Dichtungsmanschette 13 bzw. 29 auf der abgewinkelten Stirnfläche 2a bzw. 18a des Ventilgehäuses 2 bzw. 18 während des Ein- und Auskuppelvorganges.

In Fig. 7 sind Details bei der Mantel-Verbindung dargestellt. Bei der gezeigten Variante ist das Ventilgehäuse 2 mit einer zusätzlichen Nut 36 versehen, in die eine durch eine Gewindebohrung am Rand des Mantels 14 gedrehte Schraube 35 eingreit, wodurch eine sichere Arretierung des Mantels 14 gewährleistet ist. Die Manteldichtung 15 ist bei dieser Variante vorzugsweise im Querschnitt nicht quadratisch, sondern kreisförmig, wodurch ein erleichtertes Montieren bzw. Demontieren des Mantels ermöglicht wird. Die weitere Ausbildung der Schnellverschlußkupplung ist wie vorstehend beschrieben.

Alternativ hierzu kann auch eine Kugel in die zusätzliche Nut eingreifen und wird durch die Schraube 35 arretiert.

## Patentansprüche

1. Schnellverschlußkupplung, bestehend aus zwei identischen Schnellverschlußkupplungsteilen, wobei jedes Schnellverschlußkupplungsteil (A,B) ein ringförmiges Ventilgehäuse (2,18) aufweist, in dessen Innenraum eine Ventilkörperführung (6,22) befestigt ist, die einen beweglichen Ventilkörper (11,27) führt, wobei eine ringförmige Dichtungsmanschette (13,29) aus elastischem Material abschnittsweise über das Ventilgehäuse (2,18) jedes Schnellverschlußkupplungsteiles (A,B) greift, wobei im eingekuppelten Zustand die Ventilkörper und die Stirnflächen der Dichtungsmanschetten (13,29) beider Schnellverschlußkupplungsteile (A,B) gegeneinander pressen, wodurch durchlässige Ringkanäle (31) zwischen den Ventilgehäusen (2,18) bzw. den Dichtungsmanschetten (13,29) und den Ventilkörpern (11,27) entstehen, und wobei ein Schnellverschlußkupplungsteil (A) zusätzlich von einem abschnittsweise über Ventilgehäuse (2) und Dichtungsmanschette (13) greifenden, hohlzylinderförmigen Mantel (14) umgeben ist, der im eingekoppelten Zustand über Ventilgehäuse (18) und Dichtungsmanschette (29) des weiteren Schnellverschlußkupplungsteils (B) greift, wodurch sich eine Pressung zwischen den Dichtungsmanschetten (13,29) und dem Mantel (14) einstellt wobei die Dichtungs manschetten im ausgekuppelten Zustand über die Ventilkegel greifen, dadurch gekennzeichnet, daß die Ventilkörper als Ventilkegel (11,27) ausgebildet sind, wobei im ausgekuppelten Zustand die Kegelfläche (11c,27c) der Ventilkegel (11,27) jedes Schnellverschlußkupplungsteils über eine Ventilkegeldichtung (16,30) gegen die im Bezug zur Bewegungsrichtung des Ventilkegels abgewinkelten Stirnfläche (2a,18a) des Ventilgehäuses drückt, daß die Dichtungsmanschetten (13,29) mit eingelagerten Segmenten (13a,29a) versehen sind, die beim Gegeneinanderdrücken der beiden Ventilkegel (11,27) durch Aufschieben auf die abgewinkelten Stirnflächen (2a,18a) des Ventilgehäuses (2,18) die Dichtungsmanschetten (13,29) öffnen.

2. Schnellverschlußkupplung nach Anspruch 1, dadurch gekennzeichnet, daß die Segmente (13a,29a) aus Kunststoff bestehen.

3. Schnellverschlußkupplung nach Anspruch 1, dadurch gekennzeichnet, daß die Segmente (13a,29a) aus Metall bestehen.

4. Schnellverschlußkupplung nach Anspruch 1, dadurch gekennzeichnet, daß die Segmente (13a,29a) dreieckförmig ausgebildet sind.

5. Schnellverschlußkupplung nach einem der Ansprüche 1 bis 4, dadurch gekennzeichnet, daß der Mantel (14) an seiner Außenkante mit einer Schrägfläche (14a) zum erleichterten Aufschieben auf die Dichtungsmanschette (29) versehen ist.

6. Schnellverschlußkupplung nach einem der Ansprüche 1 bis 5, dadurch gekennzeichnet, daß das Ventilgehäuse (2,18) und der Mantel (14) mit Ringnuten versehen sind, die zur Aufnahme einer zwischen beiden Ringnuten einlegbaren, den Mantel fixierenden Manteldichtung (15) dienen.

7. Schnellverschlußkupplung nach einem der Ansprüche 1 bis 6, dadurch gekennzeichnet, daß der Ventilkegel (11,27) mit einem Führungszapfen (11a,27a) versehen ist, der in einem zylinderförmigen Hohlraum (6a,22a) der Kegelführung (6,22) beweglich geführt wird.

8. Schnellverschlußkupplung nach Anspruch 7, dadurch gekennzeichnet, daß zwischen Führungszapfen (11a,27a) und Innenwandung des Ventilkegels (11,27) ein Ringspalt (11b,27b) zur Aufnahme einer Spiralfeder (12,28) gebildet wird, wobei die Spiralfeder (12,28) gegen die Stirnfläche (6b,22b) der Kegelführung (6,22) drückt.

9. Schnellverschlußkupplung nach einem der Ansprüche 1 bis 8, dadurch gekennzeichnet, daß das Ventilgehäuse (2,18) eine Ringnut (2b,18b) zur Aufnahme eines Teils der Dichtungsmanschette (13,29) aufweist.

10. Schnellverschlußkupplung nach einem der Ansprüche 1 bis 9, dadurch gekennzeichnet, daß das Ventilgehäuse (2,18) eine Ringnut zur Aufnahme einer zwischen einem externen Flansch (1,17) und dem Ventilgehäuse (2,18) angeordneten Gehäusedichtung (5,21) aufweist.

11. Schnellverschlußkupplung nach Anspruch 10, dadurch gekennzeichnet, daß das Ventilgehäuse (2,18) eine weitere Ringnut (3,19) zur Aufnahme eines in eine Ausnehmung des Flansches (1,17) greifenden Befestigungsmittels (4,20) aufweist.

12. Schnellverschlußkupplung nach einem der Ansprüche 1 bis 11, dadurch gekennzeichnet, daß die Kegelführung (6,22) über mindestens zwei Tragarme (7,23) am Ventilgehäuse (2,18) befestigt ist, wobei die Tragarme mit einem Ring (8,24) verbunden sind, der in eine Ringnut (10a,26a) des Ventilgehäuses (2,18) eingreift.

13. Schnellverschlußkupplung nach Anspruch 12, dadurch gekennzeichnet, daß die Ringnut (10a,26a) einerseits durch eine Ringnase (9,25) und andererseits durch eine zur Aufnahme eines Sicherungsringes (10,26) geeigneten Nut begrenzt ist.

14. Schnellverschlußkupplung nach einem der Ansprüche 1 bis 13, dadurch gekennzeichnet, daß das Ventilgehäuse (18) mit einer Nut (36) versehen ist, die zur Arretierung des Mantels (14) unter Einsatz eines in einer Ausnehmung am Mantelrand geführten Befestigungsmittels (35) dient.

## Claims

1. Rapid-action sealing connection, consisting of two identical rapid-action sealing connection parts, each rapid-action sealing connection part (A, B) having an annular valve housing (2, 18) in whose internal space is fastened a valve body guide (6, 22) which guides a movable valve body (11, 27), a section of an annular seal collar (13, 29) made of an elastic material passing over the valve housing (2, 18) of each rapid-action sealing connection part (A, B), the valve bodies and the end surfaces of the seal collars (13, 29) of both rapid-action sealing connection parts (A, B) pressing against one another in the connected condition, by which means annular passages (31) through which flow can occur appear between the valve housings (2, 18) and the seal collars (13, 29), on the one hand, and the valve bodies (11, 27), on the other, and one rapid-action sealing connection part (A) being additionally surrounded by a hollow cylindrical shell (14) passing over sections of the valve housing (2) and the seal collar (13), which shell (14) passes over the valve housing (18) and the seal collar (29) of the further rapid-action sealing connection part (B) in the connected condition so that a pressure occurs between the seal collars (13, 29) and the shell (14), the seal collars passing over the valve cone in the disconnected condition, characterized in that the valve bodies are is configured as valve cones (11, 27), the conical surface (11c, 27c) of the valve cones (11, 27) of each rapid-action sealing connection part pressing, in the disconnected condition, by means of a valve cone seal (16, 30) against the end surface (2a, 18a) of the valve housing, which end surface (2a, 18a) is angled with respect to the direction of motion of the valve cone, in that the seal collars (13, 29) are provided with embedded segments (13a, 29a) which, by being pushed onto the angled end surfaces (2a, 18a) of the valve housing (2, 18), open the seal collars (13, 29) when the two valve cones (11, 27) are pressed against one another.

2. Rapid-action sealing connection according to Claim 1, characterized in that the segments (13a, 29a) consist of plastic.

3. Rapid-action sealing connection according to Claim 1, characterized in that the segments (13a, 29a) consist of metal.

4. Rapid-action sealing connection according to Claim 1, characterized in that the segments (13a, 29a) have a triangular configuration.

5. Rapid-action sealing connection according to one of Claims 1 to 4, characterized in that the shell (14) is provided on its outer edge with an oblique surface (14a) to make it easier to push it onto the seal collar (29).

6. Rapid-action sealing connection according to one of Claims 1 to 5, characterized in that the valve housing (2, 18) and the shell (14) are provided with annular grooves which are used for accommodating a shell seal (15) which fixes the shell and which can be inserted between the two annular grooves.

7. Rapid-action sealing connection according to one of Claims 1 to 6, characterized in that the valve cone (11, 27) is provided with a guide trunnion (11a, 27a) which is movably guided in a cylindrical hollow space (6a, 22a) of the guide cone (6, 22).

8. Rapid-action sealing connection according to Claim 7, characterized in that an annular gap (11b, 27b) is formed between the guide trunnion (11a, 27a) and the inner wall of the valve cone (11, 27) for accommodating a helical spring (12, 28), the helical spring (12, 28) pressing against the end surface (6b, 22b) of the guide cone (6, 22).

9. Rapid-action sealing connection according to one of Claims 1 to 8, characterized in that the valve housing (2, 18) has an annular groove (2b, 18b) for accommodating a part of the seal collar (13, 29).

10. Rapid-action sealing connection according to one of Claims 1 to 9, characterized in that the valve housing (2, 18) has an annular groove for accommodating a housing seal (5, 21) arranged between an external flange (1, 17) and the valve housing (2, 18).

11. Rapid-action sealing connection according to Claim 10, characterized in that the valve housing (2, 18) has a further annular groove (3, 19) for accommodating a fastening means (4, 20) engaging in a recess of the flange (1, 17).

12. Rapid-action sealing connection according to one of Claims 1 to 11, characterized in that the guide cone (6, 22) is fastened by means of at least two support arms (7, 23) on the valve housing (2, 18), the support arms being connected to a ring (8, 24) which engages in an annular groove (10a, 26a) of the valve housing (2, 18).

13. Rapid-action sealing connection according to Claim 12, characterized in that the annular groove (10a, 26a) is bounded, at one end, by an annular projection (9, 25) and, at the other end, by a groove suitable for accommodating a lock ring (10, 26).

14. Rapid-action sealing connection according to one of Claims 1 to 13, characterized in that the valve housing (18) is provided with a groove (36) which is used for locking the shell (14) with the use of a fastening means (35) guided in a recess on the edge of the shell.

## Revendications

1. Raccord rapide à obturateur formé de deux parties de raccord rapide à obturateur identiques, chaque partie de raccord rapide à obturateur (A, B) comportant un corps de valve (2, 18) annulaire dans la chambre intérieure duquel est fixé un guide d'obturateur (6, 22) qui assure le guidage d'un obturateur (11, 27) mobile, un manchon d'étanchéité (13, 29) annulaire en matériau élastique s'engageant partiellement sur le corps de valve (2, 18) de chaque partie de raccord rapide (A, B), les obturateurs et les surfaces frontales des manchons d'étanchéité (13, 29), des deux parties de raccord rapide à obturateur (A, B) étant pressées l'un contre l'autre à l'état accouplé et formant des conduits de passage (31) annulaires entre les corps de valve (2, 18) voire les manchons d'étanchéité (13, 29) et le obturateurs (11, 27) et une partie de raccord rapide à obturateur (A) étant en outre entourée par une enveloppe (14) cylindrique creuse qui est montée partiellement sur le corps (2) de la valve et le manchon d'étanchéité (13) et qui à l'état connecté s'engage sur le corps de valve (18) et le manchon d'étanchéité (29) de l'autre partie de raccord rapide (B), une pression s'exerçant entre les manchons d'étanchéité (13, 29) et l'enveloppe (14), les manchons d'étanchéité agissant sur les obturateurs à l'état déconnecté, caractérisé par le fait que les obturateurs sont agencés sous forme de soupapes coniques (11, 27), à l'état déconnecté, la surface conique (11c, 27c) des soupapes coniques (11, 27) de chaque partie de raccord rapide à obturateur venant en appui par l'intermédiaire d'un joint de soupape (16, 30) sur la surface frontale (2a, 18a) du corps de valve inclinée par rapport à la direction de déplacement de la soupape conique et par le fait que les manchons d'étanchéité (13, 29) sont pourvus de segments (13a, 29a) intégrés qui lors de l'entrée en contact des deux soupapes coniques (11, 27) ouvrent les manchons d'étanchéité (13, 29) par glissement sur les surfaces frontales (2a, 18a) inclinées du corps de valve (2, 18).

2. Raccord rapide à obturateur selon la revendication 1, caractérisé par le fait que les segments (13a, 29a) sont en matière plastique.

3. Raccord rapide à obturateur selon la revendication 1, caractérisé par le fait que les segments (13a, 29a) sont en métal.

4. Raccord rapide à obturateur selon la revendication 1, caractérisé par le fait que les segments (13a, 29a) ont une forme triangulaire.

5. Raccord rapide à obturateur selon l'une des revendications 1 à 4, caractérisé par le fait que l'enveloppe (14) est pourvue au niveau de son bord extérieur d'une surface inclinée (14a) aux fins de faciliter l'introduction du manchon d'étanchéité (29).

6. Raccord rapide à obturateur selon l'une des revendications 1 à 5, caractérisé par le fait que le corps de valve (2, 18) et l'enveloppe (14) sont pourvus de gorges annulaires qui sont destinées à recevoir un joint d'neveloppe (15) qui se monte entre les deux gorges et bloque l'enveloppe.

7. Raccord rapide à obturateur selon l'une des revendications 1 à 6, caractérisé par le fait que la soupape conique (11, 27) est pourvu d'une tige de guidage (11a, 27a) qui est guidée avec possibilité de de déplacement dans une cavité (6a, 22a) cylindrique du guide de soupape (6, 22).

8. Raccord rapide à obturateur selon la revendication 7, caractérisé par le fait qu'un espace annulaire (11b, 27b) destiné à recevoir un ressort (12, 28) hélicoïdal est formé entre la tige de guidage (11a, 27a) et la paroi intérieure de la soupape conique (11, 27), le ressort hélicoïdal (12, 28) venant en appui contre la face frontale (6b, 22b) du guide soupape (6, 22).

9. Raccord rapide à obturateur selon l'une des revendications 1 à 8, caractérisé par le fait que le corps de valve (2, 18) présente une gorge (2b, 18b) annulaire qui est destinée à recevoir une partie du manchon d'étanchéité (13, 29).

10. Raccord rapide à obturateur selon l'une des revendications 1 à 9, caractérisé par le fait que le corps de valve (2, 18) présente une gorge annulaire qui est destinée à recevoir un joint de corps (5, 21) qui est disposé entre une bride extérieure (1, 17) et le corps de valve (2, 18).

11. Raccord rapide à obturateur selon la revendication 10, caractérisé par le fait que le corps de valve (2, 18) présente une gorge annulaire (3, 19) supplémentaire qui est destinée à recevoir un moyen de fixation (4, 20) qui pénètre dans un évidement de la bride (1, 17).

12. Raccord rapide à obturateur selon l'une des revendications 1 à 11, caractérisé par le fait que le guide de soupape (6, 22) est fixé sur le corps de valve (2, 18) par au moins deux bras supports (7, 23), les bras supports étant liés à une bague (8, 24) qui s'engage dans une gorge annulaire (10a, 26a) du corps de valve (2, 18).

13. Raccord rapide à obturateur selon la revendication 12, caractérisé par le fait que la gorge annulaire (10a, 26a) est délimitée d'un côté par un rebord annulaire (9, 25) et de l'autre côté par une rainure adaptée pour recevoir un jonc élastique (10, 26).

14. Raccord rapide à obturateur selon l'une des revendications 1 à 13, caractérisé par le fait que le corps de valve (18) est pourvu d'une gorge (36) qui sert à immobiliser l'enveloppe (14) à l'aide d'un moyen de fixation (35) engagé dans un évidement du bord de l'enveloppe.
